# EUROPÄISCHE PATENTSCHRIFT

(11) **EP 3 990 205 B1**
(45) Veröffentlichungstag und Bekanntmachung des Hinweises auf die Patenterteilung: **08.03.2023**
(21) Anmeldenummer: 20732602.6
(22) Anmeldetag: 17.06.2020
(51) Int. Cl.: F16H 55/06, F16H 55/17, B25D 11/00, B25F 5/00

(54) **VERBUNDZAHNRAD FÜR EINEN ELEKTROPNEUMATISCHEN BOHRHAMMER**
COMPOSITE GEAR FOR AN ELECTROPNEUMATIC DRILL HAMMER
ROUE DENTÉE COMPOSITE POUR UN MARTEAU DE FORAGE ÉLECTROPNEUMATIQUE

(30) Priorität: 26.06.2019 EP 19182585
(43) Veröffentlichungstag der Anmeldung: 04.05.2022
(73) Patentinhaber: Hilti Aktiengesellschaft, 9494 Schaan (LI)
(72) Erfinder: SELTMANN, Daniel, 86899 Landsberg am Lech (DE); FÜNFER, Josef, 86343 Königsbrunn (DE)
(74) Vertreter: Hilti Aktiengesellschaft Corporate Intellectual Property
(86) Internationale Anmeldenummer: PCT/EP2020/066684
(87) Internationale Veröffentlichungsnummer: WO 2020/260081

(56) Entgegenhaltungen:
- EP-A1- 2 444 204
- DE-A1-102008 019 041
- DE-A1-102014 104 949

## Beschreibung

Die vorliegende Erfindung betrifft ein Verbundzahnrad für einen elektropneumatischen Bohrhammer gemäß dem Oberbegriff des Anspruchs 1, wobei das Verbundzahnrad einen aus einem ersten Material bestehenden Grundkörper und eine umlaufende Verzahnung aufweist. Ein solches Verbundzahnrad ist aus der EP 2 444 204 A1 bekannt.

Verbundzahnräder der eingangs genannten Art sind grundsätzlich aus dem Stand der Technik bekannt.

Es ist Aufgabe der vorliegenden Erfindung ein Verbundzahnrad, insbesondere für die Verwendung in einer Getriebeeinheit eines elektropneumatischen Bohrhammers bereitzustellen, welches eine vergleichsweise hohe Standfestigkeit bei vergleichsweise geringem Gewicht aufweist.

Die Aufgabe wird durch die Merkmale des Anspruchs 1 gelöst, wobei die umlaufende Verzahnung, entlang eines ersten Kreisbogens, durch einen Zahnkörper des Verbundzahnrades gebildet ist, und, entlang des verbleibenden zweiten Kreisbogens, durch den Grundkörper selbst gebildet ist, wobei der Zahnkörper aus einem zweiten Material besteht, das von dem ersten Material verschieden ist.

Die Erfindung schliesst die Erkenntnis ein, dass Zahnräder - insbesondere, wenn diese in einer mit einem Schlagwerk zusammenwirkenden Getriebeeinheit eines elektropneumatischen Bohrhammers zum Einsatz kommen - einem kurbelwinkelabhängigen Drehmoment ausgesetzt sind. Dieses Drehmoment tritt periodisch auf und kann, entlang eines Umlaufs von 360 Grad um bis zu einer Größenordnung variieren. Dadurch, dass die umlaufende Verzahnung des erfindungsgemäßen Verbundzahnrads entlang des ersten Kreisbogens durch einen vorzugsweise aus Stahl bestehenden Zahnkörper gebildet ist, kann eine hochbelastbare aber auch vergleichsweise schwere Verstärkung der umlaufenden Verzahnung auf ein Minimum beschränkt werden. Dadurch weist dann erfindungsgemäße Verbundzahnrad eine vergleichsweise hohe Standfestigkeit bei vergleichsweise geringem Gewicht auf. Vorzugsweise ist die umlaufende Verzahnung, entlang eines ersten Kreisbogens, ausschließlich durch den Zahnkörper des Verbundzahnrades gebildet.

Es hat sich als vorteilhaft herausgestellt, wenn der erste Kreisbogen einen Zentriwinkel von weniger als 90 Grad, vorzugsweise weniger als 45 Grad aufweist.

In einer besonders bevorzugten Ausgestaltung weist der Grundkörper eine Nut auf, in die Zahnkörper zumindest abschnittweise eingebracht ist. Besonders wird der Zahnkörper - sowohl in Umfangsrichtung als auch in radialer Richtung - formschlüssig im Grundkörper gehalten. Der Zahnkörper kann in radialer Richtung durch einen Kraftschluss, z.B. durch Einpressen, im Grundkörper gehalten sein. Vorzugsweise ist genau ein Zahnkörper, der mehrere Zähne der umlaufende Verzahnung aufweist, vorgesehen.

In einer besonders bevorzugten Ausgestaltung weist das Verbundzahnrad ein Auswuchtgewicht aufweist um eine durch den Zahnkörper verursachte Unwucht zu kompensieren. Vorzugsweise ist das Auswuchtgewicht als diskretes Gewicht bereitgestellt, das auf einer dem Zahnkörper gegenüberliegenden Seite des Verbundzahnrads angeordnet ist. Alternativ oder zusätzlich kann das Auswuchtgewicht einstückig mit dem Grundkörper ausgebildet sein, beispielsweise durch eine Materialverdickung.

Es hat sich als vorteilhaft herausgestellt, wenn das erste Material ein Kunststoff ist, beispielsweise Thermoplaste oder Duroplaste. Das zweite Material ist vorzugsweise Metall, insbesondere ein gehärtetes Metall. Besonders bevorzugt ist das zweite Material ein Stahlwerkstoff. Vorzugsweise wiegt das Verbundzahnrad weniger als 150 Gramm.

In einer weiteren bevorzugten Ausgestaltung weist das Verbundzahnrad eine zentrale Nabe auf, die vorzugsweise zum Vorgeben eines Timings des Verbundzahnrads vorgesehen ist. Die zentrale Nabe kann als Insert ausgebildet sein und vorzugsweise eine Innenverzahnung mit acht Zähnen aufweisen. Das Insert kann formschlüssig, kraftschlüssig oder materialschlüssig im Grundkörper gehalten sein. Die als Insert ausgebildete Nabe besteht vorzugsweise Metall, insbesondere einem gehärteten Metall, vorzugsweise Stahl.

Erfindungsgemäß wird ebenfalls ein elektropneumatischer Bohrhammer gemäß dem Anspruch 9 bereitgestellt, wobei der Verbundhammer ein Verbundzahnrad nach dem Anspruch 1 aufweist, wobei das Verbundzahnrad derart in einer Getriebeeinheit des Bohrhammers verbaut ist, dass lediglich der durch den Zahnkörper gebildete Teil der umlaufenden Verzahnung einem erhöhten Moment eines Schlagwerks des Bohrhammers ausgesetzt ist. Der elektropneumatische Bohrhammer kann durch die mit Bezug auf das Verbundzahnrad beschriebenen Merkmale vorteilhaft weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines erfindungsgemäßen Verbundzahnrads; und
- Fig. 2: ein elektropneumatischer Bohrhammer mit dem Verbundzahnrad der Fig. 1.

### Ausführunqsbeispiele:

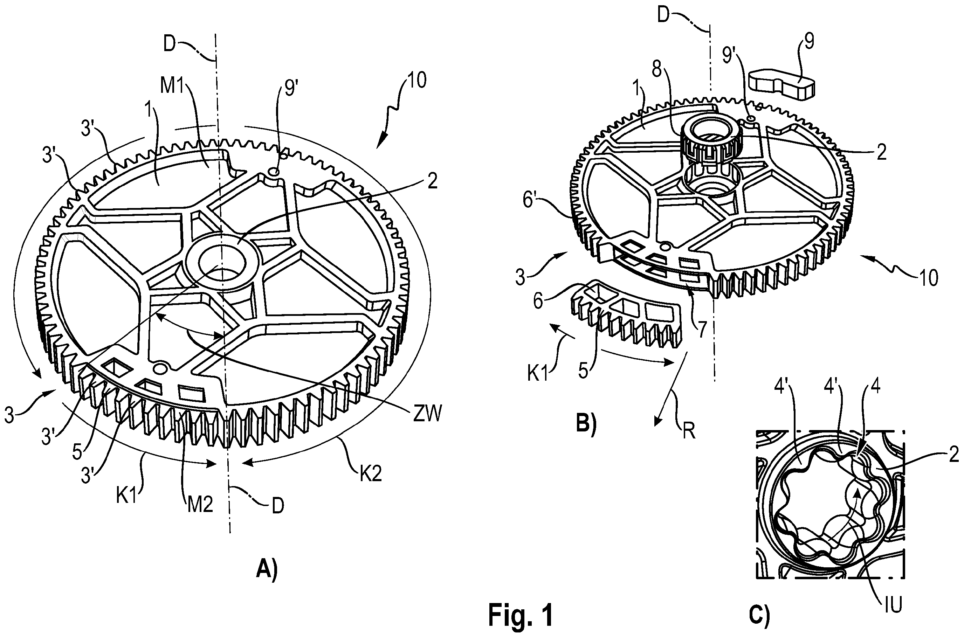

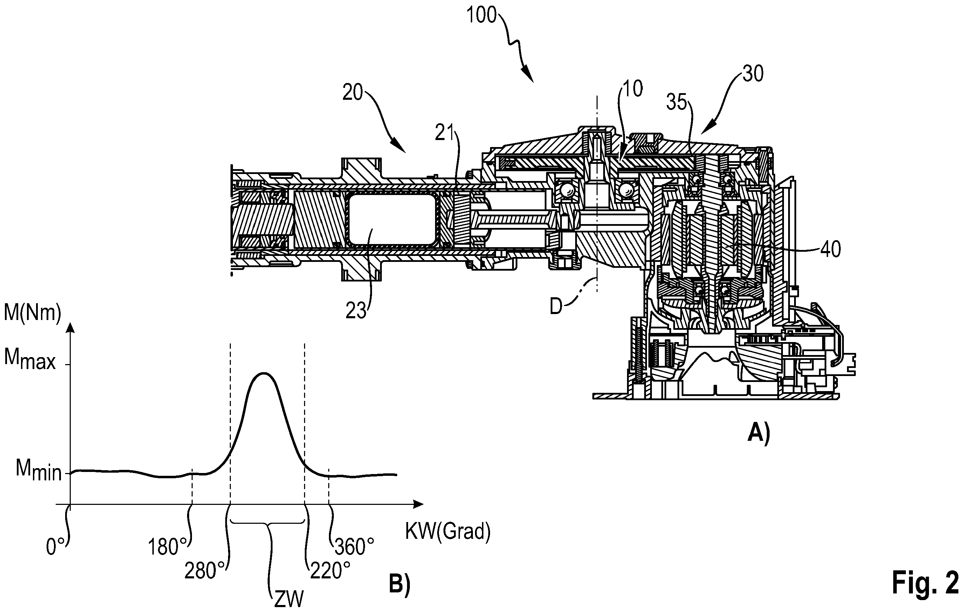

Ein bevorzugtes Ausführungsbeispiel einer erfindungsgemäßes Verbundzahnrad 10 ist in Fig. 1 dargestellt. Das Verbundzahnrad 10 kann in einer Getriebeeinheit 30 eines elektropneumatischen Bohrhammers 100 (vgl. Fig. 2) zum Einsatz kommen.

Das Verbundzahnrad 10 weist einen Grundkörper 1 bestehend aus einem ersten Material M1, vorliegend beispielhaft einem thermoplastischen Kunststoff, und eine umlaufende Verzahnung 3 auf. Die umlaufende Verzahnung 3 ist, entlang eines ersten Kreisbogens K1, lediglich durch einen Zahnkörper 5 des Verbundzahnrades 10 gebildet. Es ist genau ein Zahnkörper 5 vorgesehen, der mehrere Zähne 3' der umlaufenden Verzahnung 3 aufweist. Der zweite Zahnkörper 5 ist aus einem zweiten Material M2 gebildet, das von dem ersten Material M1 verschieden ist. Im vorliegend dargestellten ist das zweite Material M2 ein Stahlwerkstoff.

Wie der Fig. 1 A entnommen werden kann ist die umlaufende Verzahnung 3, entlang des verbleibenden zweiten Kreisbogens K2, durch den Grundkörper 1 selbst gebildet. Der erste Kreisbogen K1 und der zweite Kreisbogen K2 sind jeweils auf eine Drehachse D des Verbundzahnrads 10 bezogen und ergänzen sich zu einem Vollkreis.

Im in Fig. 1 A dargestellten Ausführungsbeispiel weist der erste Kreisbogen K1 einen Zentriwinkel ZW von weniger als 45 Grad, hier beispielhaft etwas 40 Grad, auf. Dies entspricht einem Sektor mit vergleichsweise hoher Drehmomentbelastung (vgl. Fig. 2 B).

Das Verbundzahnrad 10 in Fig. 1 A weist weiterhin eine zentrale Nabe 2 zum Vorgeben eines Timings des Verbundzahnrads 10 auf.

Fig. 1 B zeigt das Verbundzahnrad 10 der Fig. 1 A in Explosionsdarstellung. Gut zu erkennen ist, dass der Zahnkörper 5 als diskrete, von dem Grundkörper 1 verschiedene Komponente ausgebildet ist. Um den Zahnkörper 5 im Grundkörper 1 zu halten, weist der Grundkörper 1 eine Nut auf 7, in die Zahnkörper 5 zumindest abschnittweise eingebracht ist (Fig. 1 A zeigt den in der Nut 7 eingebrachten Zahnkörper 5). Wie der Fig. 1 B entnommen werden kann weist der Zahnkörper 5 eine Ausnehmung 6 auf. Diese dienst zum einen der Gewichtsersparnis. Zum anderen kann über diese Ausnehmung 6 und eine korrespondierende Ausnehmung 6`, die am Grundkörper 1 ausgebildet ist, der Zahnkörper 5 in radialer Richtung R befestigt werden. Die kann beispielweise durch Einstecken eines hier nicht dargestellten Stifts oder durch gemeinsames Vergießen der Ausnehmungen 6, 6' erfolgen.

Wie der Fig. 1 B entnommen werden kann, weist das Verbundzahnrad 10 ein Auswuchtgewicht 9 auf um eine durch den Zahnkörper 5 verursachte Unwucht zu kompensieren. Das Auswuchtgewicht 9 ist als diskreter Körper, vorliegend aus Stahl, ausgebildet, der bei montiertem Verbundzahnrad 10 (vgl. Fig. 1 A) vollständig innerhalb des Grundkörpers 1 befindlich ist. Beispielhaft kann das Auswuchtgewicht 9 mittels eines hier nicht dargestellten Stifts, der durch ein am Grundkörper 1 ausgebildetes Stiftloch 9' einzuführen ist, in radialer Richtung R im Grundkörper 1 gehalten werden.

Wie bereits erwähnt weist das Verbundzahnrad 10 eine zentrale Nabe 2 zum Vorgeben eines Timings des Verbundzahnrads 10 auf. Die zentrale Nabe 2 ist vorliegend als Insert ausgebildet, das formschlüssig (mittels der Außenzähne 8) im Grundköper gehalten ist.

Fig. 1 C zeigt schließlich eine zentrale Nabe 2 im Detail die Nabe 2 weist beispielhaft eine Innenverzahnung 4 mit acht Zähnen 4' auf, die gleichmäßig entlang eines inneren Umfangs IU der Nabe verteilt sind. Die Zähne 4' sind im Abstand von 45 Grad angeordnet, was in etwa dem Zentriwinkel ZW des ersten Kreisbogens K1 des Zahnkörpers 5 entspricht. Dadurch kann das Zahnrad derart in einer Getriebeeinheit 30 des Bohrhammers 100 verbaut sein, dass lediglich der durch den Zahnkörper 5 gebildete Teil der umlaufenden Verzahnung 3 einem erhöhten Moment eines Schlagwerks 20 des Bohrhammers 100 ausgesetzt ist.

Fig. 2 A zeigt nun einen solchen elektropneumatischen Bohrhammer 100. Dieser weist einen vorzugsweise bürstenlosen Elektromotor 40 auf, der über eine Getriebeeinheit 30 mit einem Schlagwerk 20 wirkverbunden ist. Das Schlagwerk weist seinerseits einen Kolben 21 auf, der auf eine Luftfeder 23 wirkt. Die Getriebeeinheit 30 weist das Verbundzahnrad 10 auf, das um die Drehachse D angetrieben wird. In Fig. 2 B ist der Drehmoment in der Getriebeeinheit 30 (genauer gesagt am Messpunkt 35) über dem Kurbelwinkel KW aufgetragen. Der Kurbelwinkel KW ist um die Drehachse D definiert. Gut zu erkennen ist, dass das Drehmoment M im Bereich von 0 Grad bis 180 Grad vergleichsweise niedrig ist (Mmin) und im Bereich zwischen 280 Grad und 320 Grad ein Spitzenmoment (Mmax) auftritt. Dieses wird durch den Zahnkörper 5 mit einem beispielhaften Zentriwinkel ZW von 40 Grad aufgenommen.

### Bezugszeichenliste

- 1: Grundkörper
- 2: Nabeneinsatz
- 3: umlaufende Verzahnung
- 4: Innenverzahnung
- 4`: Zahn
- 5: Zahnkörper
- 6, 6`: Ausnehmung
- 7: Nut
- 8: Außenzahn
- 9: Auswuchtgewicht
- 9': Stiftloch

- 10: Verbundzahnrad
- 20: Schlagwerk
- 21: Kolben
- 23: Luftfeder
- 30: Getriebeeinheit
- 35: Messpunkt
- 40: Elektromotor
- 100: Bohrhammer

- D: Drehachse
- K1: erster Kreisbogen
- K2: zweiter Kreisbogen
- KW: Kurbelwinkel
- M: Drehmoment
- M1: erstes Material
- M2: zweites Material
- R: radiale Richtung
- IU: innerer Umfang
- ZW: Zentriwinkel

## Patentansprüche

1. Verbundzahnrad (10) für einen elektropneumatischen Bohrhammer (100), wobei das Verbundzahnrad (10) einen aus einem ersten Material (M1) bestehenden Grundkörper (1) und eine umlaufende Verzahnung (3) aufweist,
**dadurch gekennzeichnet, dass** die umlaufende Verzahnung (3), entlang eines ersten Kreisbogens (K1), durch einen Zahnkörper (5) des Verbundzahnrades (10) gebildet ist, und, entlang des verbleibenden zweiten Kreisbogens (K2), durch den Grundkörper (1) selbst gebildet ist, wobei der Zahnkörper (5) aus einem zweiten Material (M2) besteht, das von dem ersten Material (M1) verschieden ist.

2. Verbundzahnrad (10) nach Anspruch 1,
**dadurch gekennzeichnet, dass** der erste Kreisbogen (K1) einen Zentriwinkel (ZW) von weniger als 90 Grad, vorzugsweise weniger als 45 Grad aufweist.

3. Verbundzahnrad (10) nach Anspruch 1 oder 2,
**dadurch gekennzeichnet, dass** der Grundkörper (1) eine Nut aufweist (7), in die Zahnkörper (5) zumindest abschnittweise eingebracht ist.

4. Verbundzahnrad (10) nach einem der vorangehenden Ansprüche,
**dadurch gekennzeichnet, dass** das Verbundzahnrad (10) ein Auswuchtgewicht (9) aufweist um eine durch den Zahnkörper (5) verursachte Unwucht zu kompensieren.

5. Verbundzahnrad (10) nach einem der vorangehenden Ansprüche,
**dadurch gekennzeichnet, dass** das erste Material (M1) ein Kunststoff ist und/oder das zweite Material (M2) ein Stahlwerkstoff ist.

6. Verbundzahnrad (10) nach einem der vorangehenden Ansprüche,
**dadurch gekennzeichnet, dass** genau ein Zahnkörper (5), der mehrere Zähne (3') der umlaufenden Verzahnung (3) aufweist, vorgesehen ist.

7. Verbundzahnrad (10) nach einem der vorangehenden Ansprüche,
**dadurch gekennzeichnet, dass** das Verbundzahnrad (10) eine zentrale Nabe (2) zum Vorgeben eines Timings des Verbundzahnrads (10) aufweist.

8. Verbundzahnrad (10) nach Anspruch 6,
**dadurch gekennzeichnet, dass** die zentrale Nabe (2) als Insert ausgebildet ist und vorzugsweise eine Innenverzahnung (4) mit acht Zähnen aufweist.

9. Elektropneumatischen Bohrhammer (100) mit einem Verbundzahnrad (10) nach einem der vorangehenden Ansprüche, wobei das Verbundzahnrad (10) derart in einer Getriebeeinheit (30) des Bohrhammers (100) verbaut ist, dass lediglich der durch den Zahnkörper (5) gebildete Teil der umlaufenden Verzahnung (3) einem erhöhten Moment eines Schlagwerks (20) des Bohrhammers (100) ausgesetzt ist.

## Claims

1. Composite gearwheel (10) for an electropneumatic hammer drill (100), wherein the composite gearwheel (10) has a basic body (1), consisting of a first material (M1), and an encircling toothing (3),
**characterized in that** the encircling toothing (3) is formed, along a first circular arc (K1), by a toothed body (5) of the composite gearwheel (10), and is formed, along the remaining second circular arc (K2), by the basic body (1) itself, wherein the toothed body (5) consists of a second material (M2) that is different than the first material (M1).

2. Composite gearwheel (10) according to Claim 1,
**characterized in that** the first circular arc (K1) has a center angle (ZW) of less than 90 degrees, preferably less than 45 degrees.

3. Composite gearwheel (10) according to Claim 1 or 2,
**characterized in that** the basic body (1) has a slot (7) into which the toothed body (5) has been at least partially introduced.

4. Composite gearwheel (10) according to one of the preceding claims,
**characterized in that** the composite gearwheel (10) has a balancing weight (9) in order to compensate for an imbalance caused by the toothed body (5).

5. Composite gearwheel (10) according to one of the preceding claims,
**characterized in that** the first material (M1) is a plastic and/or the second material (M2) is a steel material.

6. Composite gearwheel (10) according to one of the preceding claims,
**characterized in that** exactly one toothed body (5), which has a plurality of teeth (3') of the encircling toothing (3), is provided.

7. Composite gearwheel (10) according to one of the preceding claims,
**characterized in that** the composite gearwheel (10) has a central hub (2) for defining a timing of the composite gearwheel (10).

8. Composite gearwheel (10) according to Claim 6,
**characterized in that** the central hub (2) is in the form of an insert and preferably has an internal toothing (4) with eight teeth.

9. Electropneumatic hammer drill (100) having a composite gearwheel (10) according to one of the preceding claims, wherein the composite gearwheel (10) has been installed in a transmission unit (30) of the hammer drill (100) in such a way that only that part of the encircling toothing (3) that is formed by the toothed body (5) is exposed to an increased torque of an impact mechanism (20) of the hammer drill (100).

## Revendications

1. Roue dentée composite (10) destinée à un marteau perforateur électropneumatique (100), la roue dentée composite (10) comportant un corps de base (1) en un premier matériau (M1) et une denture périphérique (3),
**caractérisée en ce que** la denture périphérique (3) est formée, le long d'un premier arc de cercle (K1), par un corps denté (5) de la roue dentée composite (10) et, le long du deuxième arc de cercle restant (K2), par le corps de base (1) lui-même, le corps denté (5) étant en un deuxième matériau (M2) différent du premier matériau (M1).

2. Roue dentée composite (10) selon la revendication 1,
**caractérisée en ce que** le premier arc de cercle (K1) présente un angle au centre (ZW) inférieur à 90 degrés, de préférence inférieur à 45 degrés.

3. Roue dentée composite (10) selon la revendication 1 ou 2,
**caractérisée en ce que** le corps de base (1) comporte une rainure (7) dans laquelle le corps denté (5) est introduit au moins par portions.

4. Roue dentée composite (10) selon l'une des revendications précédentes,
**caractérisée en ce que** la roue dentée composite (10) comporte un poids d'équilibrage (9) afin de compenser un déséquilibre provoqué par le corps denté (5).

5. Roue dentée composite (10) selon l'une des revendications précédentes,
**caractérisée en ce que** le premier matériau (M1) est une matière synthétique et/ou le deuxième matériau (M2) est un acier.

6. Roue dentée composite (10) selon l'une des revendications précédentes,
**caractérisée en ce qu'**exactement un corps denté (5) qui comporte une pluralité de dents (3') de la denture périphérique (3) est prévu.

7. Roue dentée composite (10) selon l'une des revendications précédentes,
**caractérisée en ce que** la roue dentée composite (10) comporte un moyeu central (2) destiné à spécifier une synchronisation de la roue dentée composite (10).

8. Roue dentée composite (10) selon la revendication 6,
**caractérisée en ce que** le moyeu central (2) est réalisé sous la forme d'un insert et comporte de préférence une denture intérieure (4) à huit dents.

9. Marteau perforateur électropneumatique (100) comprenant une roue dentée composite (10) selon l'une des revendications précédentes, la roue dentée composite (10) étant incorporée dans une unité de transmission (30) du marteau perforateur (100) de manière à ce que seule la partie de la denture périphérique (3) qui est formée par le corps denté (5) soit soumise à un moment accru d'un mécanisme de percussion (20) du marteau rotatif (100).
